# EUROPEAN PATENT APPLICATION

(11) **EP 4 332 500 A1**
(43) Date of publication of application: **06.03.2024**
(21) Application number: 23188138.4
(22) Date of filing: 27.07.2023
(51) Int. Cl.: G01B 11/25, G03B 21/20, H04N 9/31

(54) **STRUCTURED-LIGHT SCANNING SYSTEM AND METHOD AND AN IMAGE PROJECTOR THEREOF**

(30) Priority: 01.09.2022 US 202217901469
(71) Applicant: Himax Technologies Limited, Tainan City 74148 (TW)
(72) Inventor: LU, Yin-Tung, 74148 Tainan City (TW); Kuo, Han-Yi, 74148 Tainan City (TW); WU, Shi-Jen, 74148 Tainan City (TW)
(74) Representative: Karakatsanis, Georgios

(57) **Abstract**

An image projector includes a light source capable of switchable emitting different patterns of light; and a beam shaper that shapes a light beam emitted by the light source, thereby generating a shaped pattern of light to be projected onto an object in a scene.

## Description

### BACKGROUND OF THE INVENTION

### 1. FIELD OF THE INVENTION

The present invention generally relates to an image projector, and more particularly to an image projector with a programmable light source capable of switchable emitting different patterns of light.

### 2. DESCRIPTION OF RELATED ART

An image projector (or projector for short) is an optical device that projects a (still) image or a series of images (or video) onto a surface such as a projection screen.

The projector may be adapted to a structured-light scanning system, which projects a known pattern (e.g., grids or horizontal bars) onto an object in a scene. The deform resulted from the light reflection may be analyzed to calculate the depth and surface information of the objects in the scene, as used in structured light 3D scanners.

In the conventional structured-light scanning systems, the light source of the projector has a fixed structure, which emits the same pattern of light onto the object. Therefore, the conventional structured-light scanning systems disadvantageously suffer inferior low decode rate and narrow dynamic range for structured-light scanning, thereby obtaining inaccurate depth and surface information of the object.

A need has thus arisen to propose a novel scheme for overcoming the drawbacks of the conventional projectors and structured-light scanning systems.

### SUMMARY OF THE INVENTION

In view of the foregoing, it is an object of the embodiment of the present invention to provide an image projector with a programmable light source capable of generating different patterns of light, thereby obtaining better decode rate for structured-light scanning.

According to one embodiment, an image projector includes a light source and a beam shaper. The light source is capable of switchable emitting different patterns of light. The beam shaper shapes a light beam emitted by the light source, thereby generating a shaped pattern of light to be projected onto an object in a scene.

According to another embodiment, a structured-light scanning system includes a light source, a controller and a camera. The light source emits a light beam, and includes a laser array composed of a plurality of laser diodes. The controller individually programs the plurality of laser diodes to turn on or off to switchable emit lights to result in different patterns of light to be projected onto an object in a scene. The camera captures a reflected pattern of light reflected from the object in the scene, the captured reflected pattern of light being then fed to the controller to accordingly determine depth and surface information.

According to a further embodiment, a structured-light scanning method includes the following steps. A light source capable of switchable emitting different patterns of light is provided. The light source emits a light beam with a pattern of light projected onto an object in a scene. Decode to determine depth and surface information according to deform of a reflected pattern of light reflected from the object in the scene. It determines whether a decode rate obtained in determining depth and surface information is greater than a predetermined threshold. If the decode rate is not greater than the predetermined threshold, changing the pattern of light and emitting a light beam with a changed pattern of light projected onto the object in the scene.

### BRIEF DESCRIPTION OF THE DRAWINGS

FIG. 1 shows a block diagram illustrating an image projector according to one embodiment of the present invention;
FIG. 2 shows a schematic diagram illustrating the VCSEL (of the light source) of FIG. 1;
FIG. 3A through FIG. 3C show exemplary (different) patterns of light emitted at different times by the (programmable) VCSEL of the light source of FIG. 1;
FIG. 3D shows a pattern of light emitted without adopting the programmable VCSEL as the embodiment;
FIG. 4A shows exemplary shaped patterns of light by (DOE/MLA/MDL) shaping the light beam emitted directly from the light source;
FIG. 4B shows exemplary shaped patterns of light by (DOE/MLA/MDL) shaping the light beam passed indirectly through the lens;
FIG. 4C shows exemplary shaped patterns of light by (LC lens) shaping the light beam emitted directly from the light source;
FIG. 5 shows a block diagram illustrating a structured-light scanning system according to one embodiment of the present invention;
FIG. 6 shows a flow diagram illustrating a structured-light scanning method according to one embodiment of the present invention; and
FIG. 7A to FIG. 7C show exemplary patterns of light sequentially used in the flow of FIG. 6.

### DETAILED DESCRIPTION OF THE INVENTION

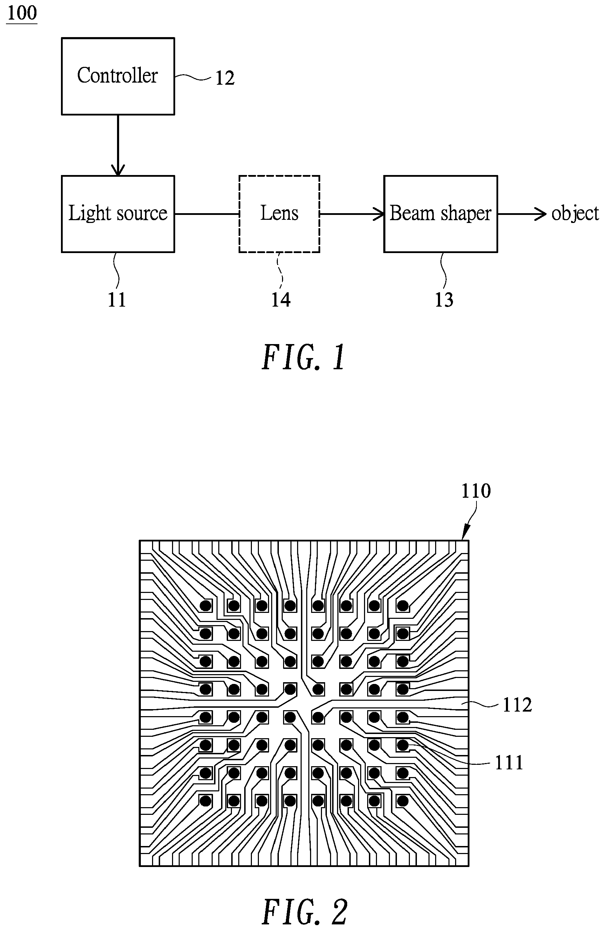

FIG. 1 shows a block diagram illustrating an image projector 100 according to one embodiment of the present invention. The image projector 100 of the embodiment may be configured to project an image onto a surface of an object in a scene, and may be applied to, but not limited to, smartphones, optical scanning, face recognition, directional displays and ultra-compact light detection and ranging (LiDAR).

Specifically, the image projector 100 may include a light source 11 configured to emit a (visible or invisible) light beam. In the embodiment, the light source 11 may include a laser array configured to emit a laser beam through a process of optical amplification based on stimulated emission of electromagnetic radiation, that is, light amplification by stimulated emission of radiation (laser). In one specific embodiment, the laser array (of the light source 11) may include a vertical-cavity surface-emitting laser (VCSEL) composed of an array of semiconductor laser diodes with laser beam emission perpendicular from a top surface thereof.

FIG. 2 shows a schematic diagram illustrating the VCSEL (of the light source 11) of FIG. 1. As shown in FIG. 2, the VCSEL may include a plurality of laser diodes 111 arranged in rows and columns. According to one aspect of the embodiment, the laser diodes 111 of the (programmable) VCSEL (of the light source 11) may be individually programmable to turn on or off by a controller 12 (e.g., central processing unit) via corresponding signal traces 112 disposed on a substrate 110 that supports the laser diodes 111. Therefore, the laser diodes 111 of the (programmable) VCSEL (of the light source 11) can switchable emit lights to result in different patterns of light.

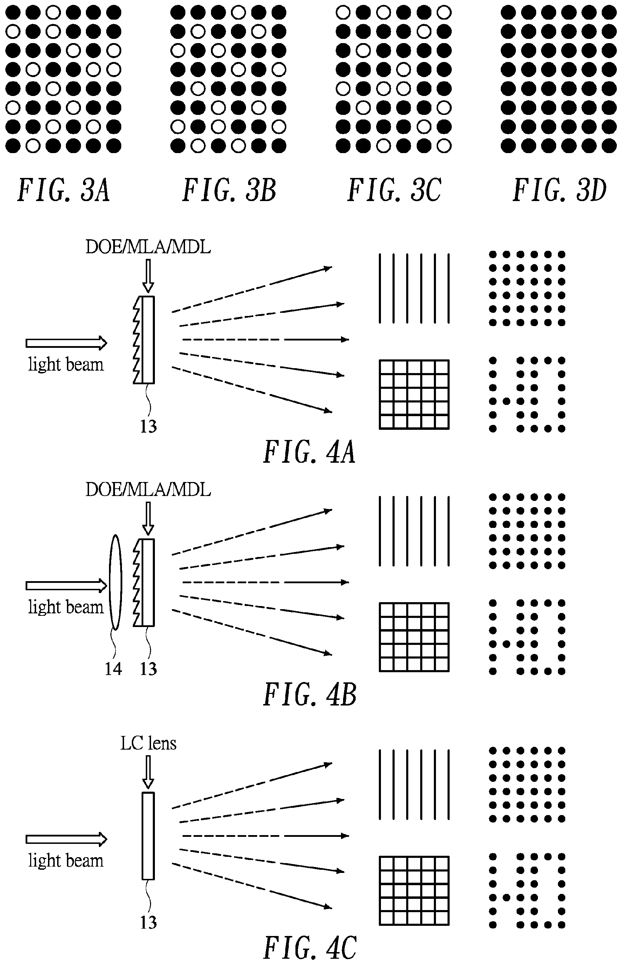

FIG. 3A through FIG. 3C show exemplary (different) patterns of light emitted at different times by the (programmable) VCSEL of the light source 11 of FIG. 1, where a solid dot represents light emitted by a corresponding laser diode 111, and a circle dot represents no light emitted by a corresponding laser diode 111. FIG. 3D shows a pattern of light emitted without adopting the programmable VCSEL as the embodiment. In this case, all laser diodes of VCSEL emit light at the same time. In other words, the pattern of light emitted by the VCSEL is fixed or unchanging.

Returning back to FIG. 1, the image projector 100 of the embodiment may include a beam shaper 13 configured to shape the light beam emitted by the light source 11, thereby generating a shaped pattern of light to be projected onto the object in the scene.

In one embodiment, the beam shaper 13 may include a diffractive optical element (DOE), a micro lens array (MLA) or a multifocal diffractive lens (MDL) that shapes and splits the light beam emitted by the light source 11 to allow a single incident beam to be focused simultaneously at several positions, thereby generating a shaped pattern of light to be projected onto the object in the scene. FIG. 4A shows exemplary shaped patterns of light by (DOE/MLA/MDL) shaping the light beam emitted directly from the light source 11.

In one embodiment, no lens is disposed between the light source 11 and the beam shaper 13, thereby resulting in a lensless system. In another embodiment, the image projector 100 may further include at least one lens 14 disposed between the light source 11 and the beam shaper 13. Specifically, the lens 14 is a transmissive optical device configured to focus, collimate or disperse the light beam (from the light source 11) by means of refraction. In one embodiment, a single lens 14 is adopted. In alternative embodiment, a compound lens composed of a plurality of lenses 14 arranged, for example, along a common axis is adopted.

In another example, the lens 14 is a transmissive optical device configured to focus, collimate or disperse the light beam (from the light source 11) by means of diffraction. In one embodiment, a Fresnel lens or Meta lens 14 is adopted, but the present embodiment is not limited thereto. FIG. 4B shows exemplary shaped patterns of light by (DOE/MLA/MDL) shaping the light beam passed indirectly through the lens 14.

In a further embodiment, the beam shaper 13 may include a liquid-crystal (LC) lens that shapes and splits the light beam emitted by the light source 11, thereby generating a shaped pattern of light to be projected onto the object in the scene. FIG. 4C shows exemplary shaped patterns of light by (LC lens) shaping the light beam emitted directly from the light source 11.

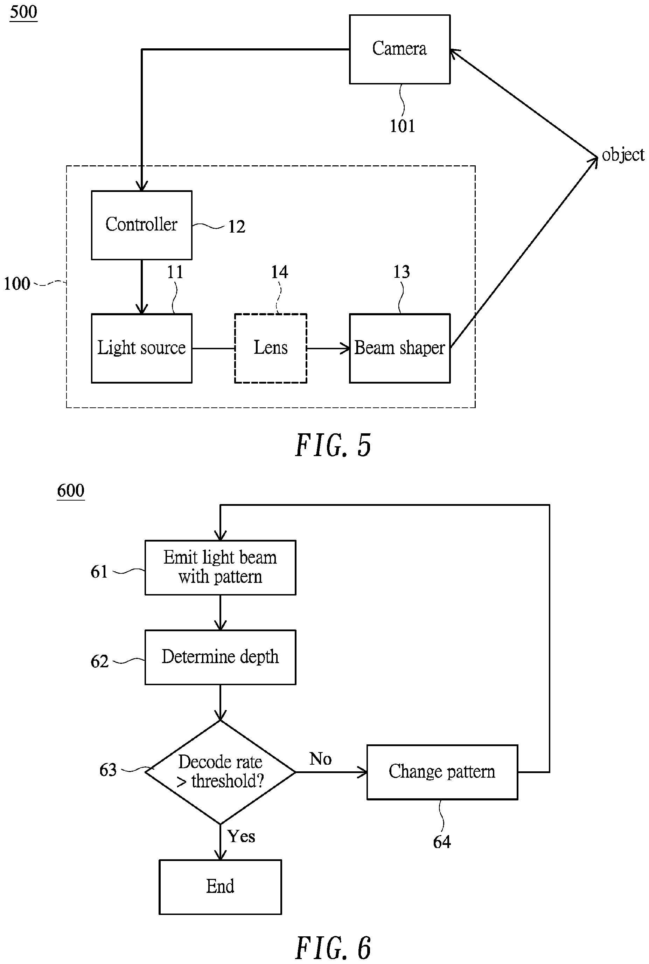

FIG. 5 shows a block diagram illustrating a structured-light scanning system 500 according to one embodiment of the present invention. Specifically, the structured-light scanning system 500 of the embodiment may include an image projector 100 of FIG. 1, details of which are omitted for brevity.

In the embodiment, the structured-light scanning system 500 may include a camera 101 configured to capture a reflected pattern of light (of the shaped pattern of light) reflected from the object in the scene. The captured reflected pattern of light is then fed to the controller 12 (e.g., a digital image processor), which can determine depth and surface information according to deform of the reflected pattern of light with respect to the pattern of light generated by the light source 11.

FIG. 6 shows a flow diagram illustrating a structured-light scanning method 600 according to one embodiment of the present invention. Specifically, in step 61, the light source 11 (e.g., a laser array such as VCSEL in the embodiment) emits a light beam with a (first or current) pattern of light programmed by the controller 12. In step 62, the controller 12 determines (or decodes) depth and surface information according to deform of the reflected (first or current) pattern of light with respect to the (first) pattern of light emitted by the light source 11.

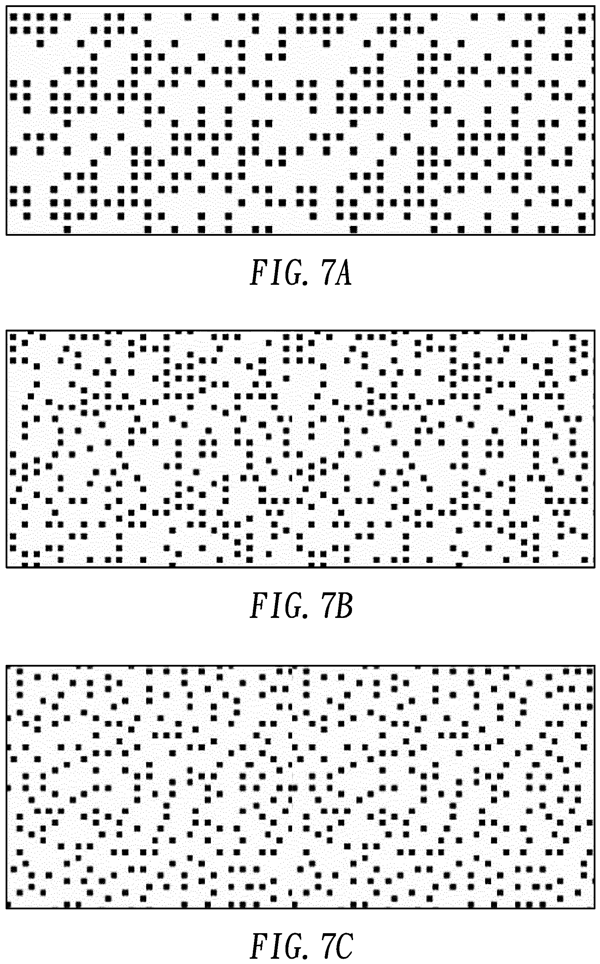

Next, in step 63, the controller 12 determines whether a decode rate obtained in determining depth and surface information (step 62) is greater than a predetermined threshold. If the decode rate is not greater than the predetermined threshold, the controller 12 changes (or programs) the current pattern of light (step 64), and the flow goes back to step 61, in which the light source 11 emits a light beam with a (second) changed pattern (as a current pattern) of light programmed by the controller 12. The flow continues until the decode rate is greater than the predetermined threshold. FIG. 7A to FIG. 7C show exemplary patterns of light sequentially used in the flow of FIG. 6.

According to the embodiments as described above, different patterns of light (generated by the programmable VCSEL) may be adapted to different objects in the scene or adapted to an object situated in different distances (from the light source 11/the camera 101) respectively. Therefore, better decode rate (and more accurate depth and surface information) for structured-light scanning system 500 and method 600 can be obtained, and wider dynamic range for structured-light scanning system 500 and method 600 can be achieved.

## Claims

1. An image projector (100), comprising:
a light source (11) capable of switchable emitting different patterns of light; and
a beam shaper (13) that shapes a light beam emitted by the light source, thereby generating a shaped pattern of light to be projected onto an object in a scene.

2. The image projector of claim 1, wherein the light source comprises a laser array composed of a plurality of laser diodes (111) capable of being individually programmable to turn on or off to switchable emit lights to result in the different patterns of light.

3. The image projector of claim 2, wherein the laser array comprises a vertical-cavity surface-emitting laser.

4. The image projector of claim 2, further comprising a controller (12) that individually programs the plurality of laser diodes to turn on or off.

5. The image projector of claim 1, wherein the beam shaper comprises a diffractive optical element, a micro lens array, a multifocal diffractive lens or a liquid-crystal lens.

6. The image projector of claim 1, further comprising at least one lens (14) disposed between the light source and the beam shaper.

7. A structured-light scanning system (500), comprising:
a light source (11) that emits a light beam, the light source including a laser array composed of a plurality of laser diodes (111);
a controller (12) that individually programs the plurality of laser diodes to turn on or off to switchable emit lights to result in different patterns of light to be projected onto an object in a scene; and
a camera (101) that captures a reflected pattern of light reflected from the object in the scene, the captured reflected pattern of light being then fed to the controller to accordingly determine depth and surface information.

8. The structured-light scanning system of claim 7, wherein the laser array comprises a vertical-cavity surface-emitting laser.

9. The structured-light scanning system of claim 7, further comprising:
a beam shaper (13) that shapes the light beam emitted by the light source, thereby generating a shaped pattern of light to be projected onto the object in the scene.

10. The structured-light scanning system of claim 9, wherein the beam shaper comprises a diffractive optical element, a micro lens array, a multifocal diffractive lens or a liquid-crystal lens.

11. The structured-light scanning system of claim 9, further comprising at least one lens (14) disposed between the light source and the beam shaper.

12. A structured-light scanning method (600), comprising:
providing a light source (11) capable of switchable emitting different patterns of light;
the light source emitting a light beam with a pattern of light projected onto an object in a scene; (61)
decoding to determine depth and surface information according to deform of a reflected pattern of light reflected from the object in the scene; (62)
determining whether a decode rate obtained in determining depth and surface information is greater than a predetermined threshold; (63) and
if the decode rate is not greater than the predetermined threshold, changing the pattern of light and emitting a light beam with a changed pattern of light projected onto the object in the scene. (64)

13. The structured-light scanning method of claim 12, wherein the light source comprises a laser array composed of a plurality of laser diodes (111) capable of being individually programmable to turn on or off to switchable emit lights to result in the different patterns of light.

14. The structured-light scanning method of claim 12, wherein the different patterns of light are adapted to different objects in the scene respectively.

15. The structured-light scanning method of claim 12, wherein the different patterns of light are adapted to an object situated in different distances from the light source respectively.
